# EUROPEAN PATENT SPECIFICATION

(11) **EP 3 438 543 B1**
(45) Date of publication and mention of the grant of the patent: **01.10.2025**
(21) Application number: 16896218.1
(22) Date of filing: 20.06.2016
(51) Int. Cl.: F24C 7/02, F24C 7/08, H02M 7/06, H05B 6/66

(54) **SURGE SUPPRESSION CIRCUIT AND MICROWAVE OVEN**
ÜBERSPANNUNGSSCHUTZSCHALTUNG UND MIKROWELLENHERD
CIRCUIT DE SUPPRESSION DE SURTENSION ET FOUR À MICRO-ONDES

(30) Priority: 30.03.2016 CN 201610196929; 30.03.2016 CN 201620262277 U
(43) Date of publication of application: 06.02.2019
(73) Proprietor: Guangdong Midea Kitchen Appliances Manufacturing Co., Ltd., Foshan, Guangdong 528311 (CN); Midea Group Co., Ltd., Foshan, Guangdong 528311 (CN)
(72) Inventor: ZHENG, Nianzhong, Foshan Guangdong 528311 (CN); LI, Qinghai, Foshan Guangdong 528311 (CN)
(74) Representative: Rowlands, Stuart Michael
(86) International application number: PCT/CN2016/086389
(87) International publication number: WO 2017/166445

(56) References cited:
- CN-A- 105 605 628
- CN-B- 101 854 766
- CN-U- 201 774 706
- CN-U- 203 746 771
- CN-U- 204 906 192
- GB-A- 2 016 826
- JP-A- 2010 041 790
- JP-A- H05 198 444
- JP-A- H09 103 066
- JP-A- S58 201 575
- KR-A- 20130 092 091
- KR-B1- 101 142 415
- US-A- 3 118 102
- US-A- 4 691 263
- US-A1- 2013 010 509
- US-B1- 6 362 463

## Description

### CROSS-REFERENCE TO RELATED APPLICATIONS

This application claims a priority to and benefits of Chinese Patent Application Serial No. 201610196929.5 and 201620262277.6, filed with the State Intellectual Property Office of P. R. China on March 30, 2016.

### FIELD

The present disclosure relates to a household appliance field, and more particularly to a surge suppression circuit and a microwave oven.

### BACKGROUND

In the related art of the inverter microwave oven, when a surge voltage exists in a circuit supplying power to a magnetron, the surge voltage may be increased by a reverse voltage generated by an inductor of a filtering unit, and thus a rectifying unit may be broken down by the overvoltage and the circuit may be damaged.

### SUMMARY

Embodiments of the present disclosure seek to solve at least one of the problems existing in the related art to at least some extent. Accordingly, embodiments of the present disclosure provide a microwave oven as set out in claim 1. Other aspects of the invention can be found in the dependent claims.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

Fig. 1 is a block diagram of a surge suppression circuit according to an embodiment of the present disclosure.
Fig. 2 is a schematic diagram of a surge suppression circuit according to an embodiment of the present disclosure.
Fig. 3 is a schematic diagram of a surge suppression circuit according to another embodiment of the present disclosure.
Fig. 4 is a schematic diagram of a surge suppression circuit according to an example not encompassed by the wording of the claims but considered useful for understanding the invention.
Fig. 5 is a schematic diagram of a surge suppression circuit according to a still example not encompassed by the wording of the claims but considered useful for understanding the invention.
Fig. 6 is a schematic diagram of a surge suppression circuit according to a still further embodiment of the present disclosure.
Fig. 7 is a block diagram of a surge suppression circuit according to an embodiment of the present disclosure.
Fig. 8 is a schematic diagram of a surge suppression circuit according to a still example not encompassed by the wording of the claims but considered useful for understanding the invention.

### DETAILED DESCRIPTION

Embodiments of the present disclosure are described in detail below, examples of which are illustrated in the drawings. The same or similar elements are denoted by same reference numerals in different drawings unless indicated otherwise. The embodiments described herein with reference to drawings are explanatory, and used to generally understand the present disclosure. The embodiments shall not be construed to limit the present disclosure.

In the present disclosure, it should be understood that terms such as "first" and "second" are used herein for purposes of description and are not intended to indicate or imply a relative importance or an amount of a feature. Thus, the feature defined with "first" and "second" may include one or more this feature. In the description of the present disclosure, unless specified otherwise, "a plurality of" means two or more than two.

In the present disclosure, unless specified or limited otherwise, the terms "mounted", "connected", "coupled" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

Various embodiments and examples are provided in the following description to implement different structures of the present disclosure. In order to simplify the present disclosure, certain elements and settings will be described. However, these elements and settings are only by way of example and are not intended to limit the present disclosure. In addition, reference numerals may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied.

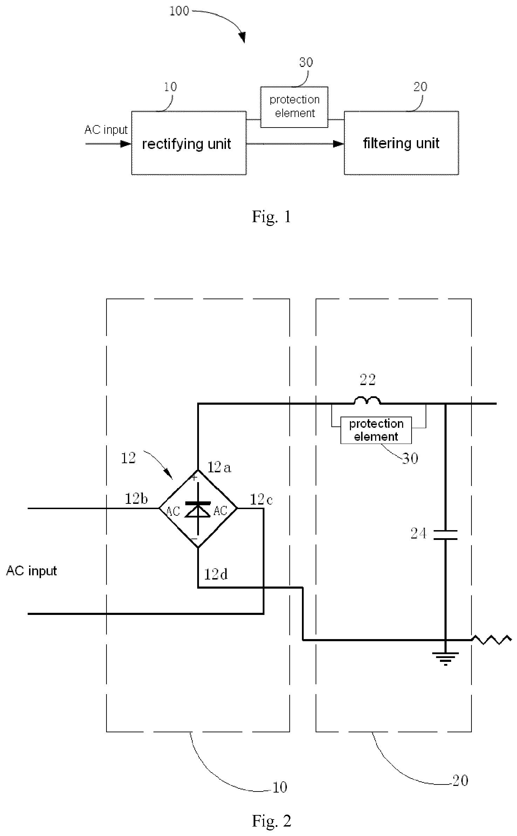

With reference to Fig. 1, embodiments of the present disclosure provide a surge suppression circuit 100, including a rectifying unit 10, a filtering unit 20 and a protection element 30.

The surge suppression circuit 100 may be used as a switching unit to supply power to a magnetron of an inverter microwave oven. When the switching unit is turned on, a strong pulse, i.e., an overvoltage exceeding a normal voltage, is generated. Such an overvoltage will cause damage to electronic components in the circuit.

The rectifying unit 10 includes a rectifying input part and a rectifying output part. The rectifying input part is coupled to a voltage input terminal and configured to convert an input electric supply (i.e., an alternating current AC) into a direct current (DC). The filtering unit 20 is coupled to the rectifying output part. Usually, the AC may still exist after rectification, and thus the filtering unit 20 is configured to filter the rectified current to obtain a relatively pure DC. The protection element 30 is disposed on the rectifying output part and coupled to the filtering unit 20, and configured to suppress an overvoltage of the rectifying output part when a surge occurs.

In the surge suppression circuit 100 described above, the overvoltage of the rectifying output part may be suppressed by the protection element 30 when the surge occurs, thereby improving a circuit reliability of the rectifying unit 10 and the entire microwave oven.

Specifically, the rectifying unit 10 includes a bridge rectifier 12. Pins 12b and 12c of the bridge rectifier are coupled to the voltage input terminal, that is, to the rectifying input part of the rectifying unit 10, and pins 12a and 12d are coupled to the filtering unit 20, that is, to the rectifying output part of the rectifying unit 10. The pins 12a and 12d may be served as two rectifying output terminals.

In some embodiments, with reference to Fig. 2, the filtering unit 20 includes an inductor 22 and a first capacitor 24. A first terminal of the inductor 22 is coupled to one rectifying output terminal 12a, and a second terminal of the inductor 22 is coupled to a first terminal of the first capacitor 24. A second terminal of the first capacitor 24 is coupled to the other rectifying output terminal 12d and a ground terminal. The protection element 30 is coupled in parallel with the inductor 22.

The direct current output from the rectifying unit 10 is not a pure direct current and still contains an alternating current part. It is known that an inductive element may be used to pass a direct current and block an alternating current. The alternating current part may be filtered by the inductor 22. However, since the inductance 22 has a limited ability to block the alternating current, a first capacitor 24 is further used for filtering the alternative current after the inductor 22 due to a capacitor nature of passing an alternating current and blocking a direct current. The alternative current may be bypassed to the ground by the first capacitor 24. On this basis, a relative pure direct current may be obtained. In addition, the inductor 22 is also configured to suppress differential mode interference between power lines when the system is powered on.

Since a reverse induced voltage may be generated by the inductor 22, an addition of the reverse voltage and the surge voltage may increase the overvoltage, such that the reverse voltage of the rectifying output part of the rectifying unit 10 may be very high, thus damaging the rectifying unit 10. The protection element 30 is provided on the rectifying output part of the rectifying unit 10 to effectively suppress the reverse voltage to improve the reliability of the rectifying unit 10.

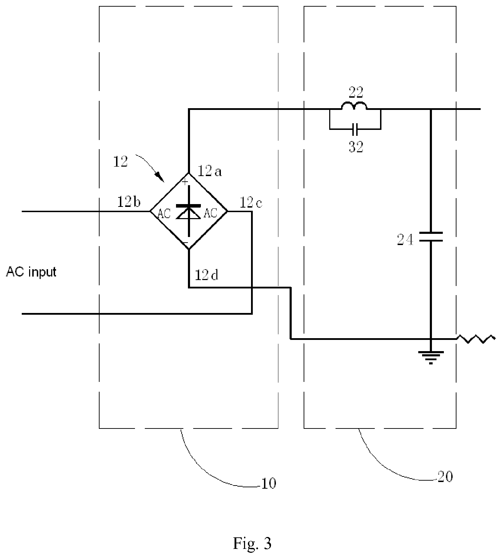

With reference to Fig. 3, in some embodiments, the protection element 30 is a second capacitor 32, and the second capacitor 32 is coupled in parallel with the inductor 22. As such, the reverse induced voltage generated by the inductor 22 during the surge may be absorbed by the second capacitor 32, thereby reducing the reverse voltage of the output terminal of the rectifying unit 10.

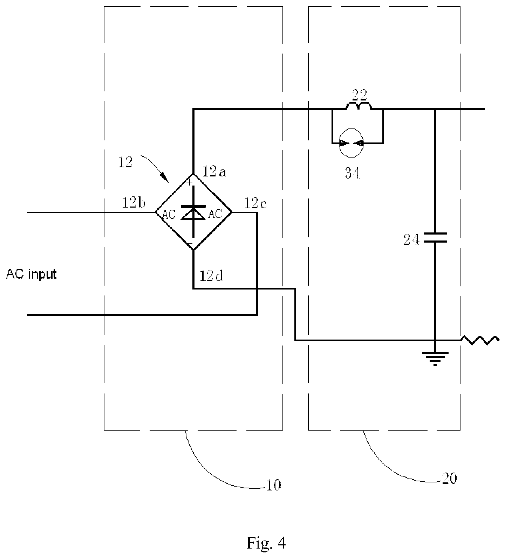

With reference to Fig. 4, in some examples useful for understanding the invention, the protection element 30 is a first discharge tube 34, and the first discharge tube 34 is coupled in parallel with the inductor 22. The discharge tube is configured to protect a target component from a high voltage. When the voltage across the discharge tube is higher than a protection standard, a short circuit will occur inside and an overvoltage input will be absorbed. The discharge tube may typically be a gas discharge tube or a semiconductor discharge tube. Similar to the second capacitor 32, the first discharge tube 34 may be configured to suppress the reverse induced voltage generated by the inductor 22 during the surge to reduce the reverse voltage of the output terminal of the rectifying unit 10.

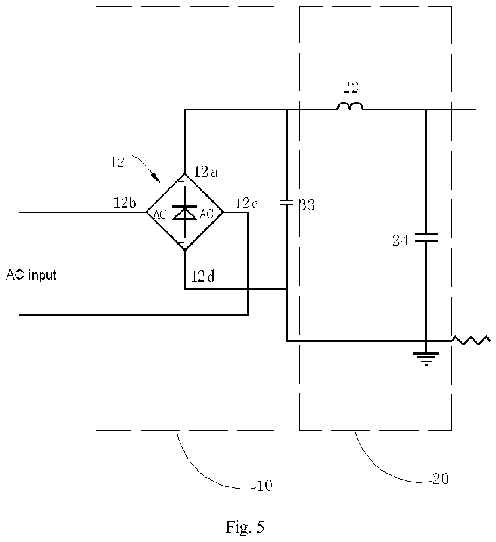

With reference to Fig. 5, in some examples useful for understanding the invention, the protection element 30 is a third capacitor 33, and the third capacitor 33 is coupled in parallel with the two output terminals 12a and 12d of the rectifying unit 10. Similar to the second capacitor 32, the reverse voltage of the rectifying output part of the rectifying unit 10 caused by the surge may be absorbed by the third capacitor 33.

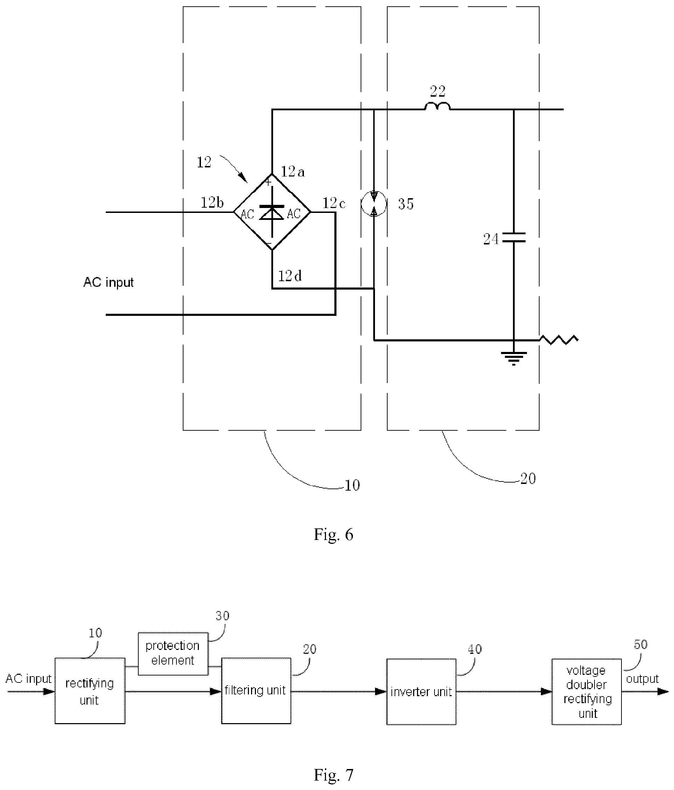

With reference to Fig. 6, in some embodiments, the protection element 30 is a second discharge tube 35, and the second discharge tube 35 is coupled in parallel with the two output terminals 12a and 12d of the rectifying unit 10. Similar to the first discharge tube 34, the reverse voltage of the rectifying output part of the rectifying unit 10 caused by the surge may be absorbed by the second discharge tube 35.

In addition, the protection element 30 may also be a transient voltage suppressor (TVS). Similar to the capacitor and the discharge tube, the TVS may be configured to absorb a large current in an instant and clamp the terminal voltage to a predetermined value, thus avoiding damages to a protected component due to a transient high-energy impact.

With reference to Fig. 7, in some embodiments, the surge suppression circuit further includes an inverter unit 40 and a voltage doubler rectifying unit 50. The inverter unit 40 is coupled to the filtering unit 20 and configured to convert a direct current output from the filtering unit 20 into an alternating current. The voltage doubler rectifying unit 50 is coupled to the inverter unit 40 and configured to boost and covert the alternating current output from the inverter unit into a high voltage direct current and supply a power.

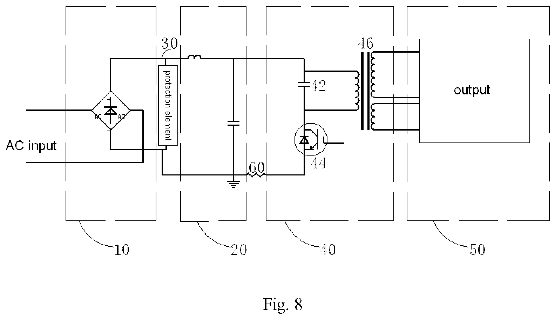

Specifically, in some examples useful for understanding the invention, with reference to Fig. 8, the inverter unit 40 includes a fourth capacitor 42, an insulated gate bipolar transistor (IGBT) 44 and a transformer 46. The transformer 46 includes a primary winding and a secondary winding, and two terminals of the primary winding are coupled to two terminals of the fourth capacitor 42 to form a resonant circuit. The secondary winding of the transformer 46 is coupled to the voltage doubler rectifying unit 50.

A first terminal of the fourth capacitor 42 is coupled to a collector of the IGBT 44 and a second terminal of the fourth capacitor 42 is coupled to the filtering unit 20, and an emitter of the IGBT 44 is coupled to the filtering unit 20 via a resistor 60.

The IGBT 44 is served as a switch to control a resonant circuit. When a direct current is input to the IGBT 44, the current may be conducted or not conducted according to the required alternating frequency, such that the direct current is divided according to the required frequency, thus converting the direct current into the alternating current. Moreover, the alternating current frequency is usually required to be high, that is, the IGBT 44 is configured to control the resonant circuit to generate a high frequency alternating current. The high frequency alternating current is output from the primary level to the secondary level of the transformer.

It should be understood that, in the circuit shown in Fig. 8, as an example, the protection element 30 is coupled in parallel with the two rectifying output terminals of the rectifying unit 10.

The microwave oven according to an embodiment of the present disclosure includes the surge suppression circuit 100 of any of the above embodiments.

Therefore, the protection element 30 in the surge suppression circuit 100 provided in the microwave oven can suppress the overvoltage of the rectifying output part caused by the surge, thus improving the circuit reliability of the rectifying unit 10 and the entire microwave oven, and also improving the anti-surge capability and the reliability of the whole machine.

Specifically, the microwave oven is an inverter microwave oven. The house current with a frequency of 50 Hz may be converted to a high frequency output current by the surge suppression circuit 100 as described above, such that an output power may be controlled by the inverter microwave oven during a heating process and a heating efficiency is improved.

Reference throughout this specification to "an embodiment", "some embodiments", "a schematic embodiment", "an example", "a specific example" or "some examples" means that a particular feature, structure, material, or characteristic described in connection with the embodiment or example is included in at least one embodiment or example of the present disclosure. Thus, the appearances of the above phrases in various places throughout this specification are not necessarily referring to the same embodiment or example of the present disclosure. Furthermore, the particular features, structures, materials, or characteristics may be combined in any suitable manner in one or more embodiments or examples.

In addition, terms such as "first" and "second" are used herein for purposes of description and are not intended to indicate or imply a relative importance or an amount of a feature. Thus, the feature defined with "first" and "second" may include one or more this feature. In the description of the present disclosure, unless specified otherwise, "a plurality of" means at least two, for example, two or three.

Although explanatory embodiments have been shown and described, it would be appreciated by those skilled in the art that the above embodiments cannot be construed to limit the present disclosure, and changes, alternatives, and modifications can be made in the embodiments without departing from the principles and scope of the present disclosure.

## Claims

1. A microwave oven comprising a surge suppression circuit (100) operable to supply power to a magnetron of the microwave oven, the surge suppression circuit comprising:
a rectifying unit (10) comprising
a rectifying input part coupled to a voltage input terminal, and
a rectifying output part comprising two rectifying output terminals;
a filtering unit (20) coupled to the rectifying output part, the filtering unit (20) comprising
an inductor (22), a first terminal of the inductor being coupled to one of the rectifying output terminals (12a), and
a first capacitor (24), a first terminal of the first capacitor (24) being coupled to a second terminal of the inductor (22) and a second terminal of the first capacitor (22) being coupled to the other one of the rectifying output terminals (12d) and a ground terminal; and
a protection element (30), coupled in parallel with the inductor (22), disposed on the rectifying output part and coupled to the filtering unit (20), and configured to suppress an overvoltage of the rectifying output part when a surge occurs; and
wherein the protection element is a second capacitor (32).

2. The microwave according to claim 1, further comprising:
an inverter unit (40) coupled to the filtering unit and configured to convert a direct current output from the filtering unit into an alternating current, and
a voltage doubler rectifying unit coupled to the inverter unit and configured to boost and covert the alternating current output from the inverter unit into a high voltage direct current and supply a power.

## Patentansprüche

1. Mikrowellenofen, der eine Überspannungsunterdrückungsschaltung (100) umfasst, die dazu betreibbar ist, einem Magnetron des Mikrowellenofens Leistung zuzuführen, wobei die Überspannungsunterdrückungsschaltung Folgendes umfasst:
eine Gleichrichtereinheit (10), die Folgendes umfasst:
ein Gleichrichtereingangsteil, das mit einem Spannungseingangsanschluss gekoppelt ist, und
ein Gleichrichterausgangsteil, das zwei Gleichrichterausgangsanschlüsse umfasst;
eine Filtereinheit (20), die mit dem Gleichrichterausgangsteil gekoppelt ist, wobei die Filtereinheit (20) Folgendes umfasst:
eine Spule (22), wobei ein erster Anschluss der Spule mit einem der Gleichrichterausgangsanschlüsse (12a) gekoppelt ist, und
einen ersten Kondensator (24), wobei ein erster Anschluss des ersten Kondensators (24) mit einem zweiten Anschluss der Spule (22) gekoppelt ist und ein zweiter Anschluss des ersten Kondensators (22) mit dem anderen der Gleichrichterausgangsanschlüsse (12d) und einem Masseanschluss gekoppelt ist; und
ein Schutzelement (30), das zu der Spule (22) parallel geschaltet, auf dem Gleichrichterausgangsteil angeordnet und mit der Filtereinheit (20) gekoppelt ist und dazu konfiguriert ist, eine Überspannung des Gleichrichterausgangsteils zu unterdrücken, wenn ein Spannungsstoß auftritt; und
wobei das Schutzelement ein zweiter Kondensator (32) ist.

2. Mikrowelle nach Anspruch 1, die ferner Folgendes umfasst:
eine Umrichtereinheit (40), die mit der Filtereinheit gekoppelt ist und dazu konfiguriert ist, einen aus der Filtereinheit ausgegebenen Gleichstrom in einen Wechselstrom umzurichten, und
eine Spannungsdoppler-Gleichrichtereinheit, die mit der Umrichtereinheit gekoppelt ist und dazu konfiguriert ist, den aus der Umrichtereinheit ausgegebenen Wechselstrom zu verstärken und in einen Hochspannungsgleichstrom umzuwandeln und eine Leistung zuzuführen.

## Revendications

1. Four à micro-ondes comprenant un circuit de suppression de surtension (100) fonctionnel pour alimenter un magnétron du four à micro-ondes, le circuit de suppression de surtension comprenant :
une unité de redressement (10) comprenant :
une partie d'entrée de redressement couplée à une borne d'entrée de tension, et
une partie de sortie de redressement comprenant deux bornes de sortie de redressement ;
une unité de filtrage (20) couplée à la partie de sortie de redressement, l'unité de filtrage (20) comprenant :
une bobine d'induction (22), une première borne de la bobine d'induction étant couplée à l'une des bornes de sortie de redressement (12a), et
un premier condensateur (24), une première borne du premier condensateur (24) étant couplée à une seconde borne de la bobine d'induction (22) et une seconde borne du premier condensateur (22) étant couplée à l'autre des bornes de sortie de redressement (12d) et à une borne de masse ; et
un élément de protection (30), couplé en parallèle avec la bobine d'induction (22), disposé sur la partie de sortie de redressement et couplé à l'unité de filtrage (20), et configuré pour supprimer une surtension de la partie de sortie de redressement lorsqu'une surtension se produit ; et
l'élément de protection étant un second condensateur (32).

2. Micro-onde selon la revendication 1, comprenant en outre :
une unité onduleur (40) couplée à l'unité de filtrage et configurée pour convertir un courant continu délivré en sortie par l'unité de filtrage en un courant alternatif, et
une unité de redressement doubleuse de tension, couplée à l'unité onduleur et configurée pour amplifier et convertir le courant alternatif délivré en sortie par l'unité onduleur en un courant continu à haute tension et fournir une alimentation.
